# EUROPEAN PATENT APPLICATION

(11) **EP 4 615 126 A1**
(43) Date of publication of application: **10.09.2025**
(21) Application number: 23884768.5
(22) Date of filing: 27.10.2023
(51) Int. Cl.: H04W 72/25

(54) **COMMUNICATION METHOD, APPARATUS, AND SYSTEM**

(30) Priority: 04.11.2022 CN 202211380089
(71) Applicant: Huawei Technologies Co., Ltd., Shenzhen, Guangdong 518129 (CN)
(72) Inventor: YI, Feng, Shenzhen, Guangdong 518129 (CN); SU, Hongjia, Shenzhen, Guangdong 518129 (CN); LU, Lei, 80992 Duesseldorf (DE)
(74) Representative: Pfenning, Meinig & Partner mbB
(86) International application number: PCT/CN2023/127196
(87) International publication number: WO 2024/093836

(57) **Abstract**

This application provides a communication method, apparatus, and system, and relates to the field of wireless communication, and in particular, to sidelink signal transmission in a wireless communication system, to resolve a problem in a conventional technology that a sidelink channel state information reference signal cannot be efficiently applied to sidelink beam management, and improve efficiency of the sidelink beam management. The method may include: sending first sidelink control information SCI, where the first SCI indicates to send M channel state information reference signals CSI-RSs, and M is a positive integer greater than or equal to 2; and sending the M CSI-RSs, where the M CSI-RSs belong to a same time unit, the M CSI-RSs include a first CSI-RS and a second CSI-RS, the first CSI-RS is sent by using a first beam, the second CSI-RS is sent by using a second beam, and the first beam and the second beam correspond to different spatial domain parameters.

## Description

### TECHNICAL FIELD

Embodiments of this application relate to the communication field, and more specifically, to a communication method, apparatus, and system.

### BACKGROUND

Wireless communication technologies have rapidly developed in the past few decades, and have been evolved from a first-generation analog communication system to a new 5G new radio (New Radio, NR) system in terms of technologies. In this complex evolution process, beamforming (beamforming) based on multiple-input multiple-output (Multiple-Input Multiple-Output, MIMO) is an important aspect. In an NR Uu system, beamforming becomes more important. The beamforming is not only an important method for improving spectral efficiency, but also an important support for using a frequency range 2 (Frequency Range 2, FR2) above 7 GHz. To efficiently and properly perform beamforming, a beam management (beam management) process is designed in NR.

In addition, as more communication scenarios are required, a device-to-device technology has developed rapidly in recent years because of an advantage that direct communication can be performed without network infrastructure. In a wireless communication system, communication between user equipments (User Equipments, UEs) is referred to as a sidelink (sidelink, SL).

However, the existing beam management process can work only between user equipment and a base station (Base Station, BS). In a sidelink scenario such as vehicle-to-everything (vehicle-to-everything, V2X) communication or the internet of vehicles, both a transmit end and a receive end are user equipments, and an existing SL channel state information reference signal (Channel State Information Reference Signal, CSI-RS) cannot be efficiently applied to SL beam management. How to design an SL CSI-RS applied to the SL beam management is a problem that needs to be resolved.

### SUMMARY

This application provides a communication method, apparatus, and system, to improve SL beam management efficiency.

According to a first aspect, a communication method is provided. The method may be performed by a terminal device, or may be performed by a component (for example, a chip or a circuit) in the terminal device. This is not limited in this application. For ease of description, an example in which a first terminal device performs the method is used below for description.

The method may include: sending first sidelink control information SCI, where the first SCI indicates to send M channel state information reference signals CSI-RSs, and M is a positive integer greater than or equal to 2; and sending the M CSI-RSs, where the M CSI-RSs belong to a same time unit, the M CSI-RSs include a first CSI-RS and a second CSI-RS, the first CSI-RS is sent by using a first beam, the second CSI-RS is sent by using a second beam, and the first beam and the second beam correspond to different spatial domain parameters.

In the foregoing technical solution, a plurality of CSI-RSs are sent by using different beams in the same time unit, so that a delay of a beam fine-tuning process is greatly shortened under a same quantity of beam sweeping times, thereby well improving SL beam management efficiency.

In a possible design, a beam for sending the first SCI is the same as a beam for sending a third CSI-RS, the third CSI-RS and the first SCI belong to a same time unit, and the third CSI-RS is a 1^{st} CSI-RS in the M CSI-RSs in time domain.

In this way, when the CSI-RS is sent by using a narrow beam, the SCI may be sent by using the narrow beam like the CSI-RS. This helps enlarge coverage of the SCI. Similarly, a receive-end terminal device can also simultaneously receive SCI and a CSI-RS in a same beam, to avoid missing detection of the CSI-RS, and reduce implementation complexity of the receive-end terminal device.

In a possible design, the M CSI-RSs are sent in a first time unit by using N different beams, where N is a positive integer greater than or equal to 2.

In comparison with sending by using only one beam in a time unit, in the foregoing solution, a quantity of training beams in the same time unit can be increased, and a beam training speed can be increased.

In a possible design, a time interval between a third beam and a fourth beam in the N different beams is greater than or equal to first time, and the first time is indicated by a network device, predefined, or preconfigured.

In this way, a transmit-end terminal device has time to adjust the beam, thereby reducing implementation complexity of the terminal device.

In a possible design, if a quantity of symbols occupied by one of the N beams is Q, and a quantity of symbols in the first time is P, N*Q+(N-1)*P≤L, where L is a quantity of symbols in the first time unit, and Q, P, and L are all positive integers.

In a possible design, a time domain position of a fourth CSI-RS in the M CSI-RSs is determined based on a start position and a first offset, where the start position is a 1^{st} symbol occupied by a signal sent by using a fifth beam, and the fifth beam is a beam for sending the fourth CSI-RS; or the start position is a 1^{st} symbol in the first time unit for sending the M CSI-RSs, and all of the M CSI-RSs correspond to different offsets.

According to the foregoing solution, a resource position of the CSI-RS can be more flexibly indicated.

In a possible design, a sixth beam in the N beams is used to send a fifth CSI-RS, and identifier information of the sixth beam is determined based on a time domain position of the fifth CSI-RS or the identifier information of the sixth beam is determined based on a resource identifier of the fifth CSI-RS.

According to the foregoing solution, an identifier of a transmit beam may be implicitly indicated, thereby reducing signaling overheads.

In a possible design, a 1^{st} symbol position of a seventh beam in the N different beams is indicated by the network device, predefined, or preconfigured; an end position of the seventh beam is determined based on a 1^{st} symbol position of a 1^{st} beam after the seventh beam and the first time; and a 1^{st} symbol occupied by the seventh beam is used for automatic gain control or receive power adjustment.

According to the foregoing solution, a resource position of the beam can be more flexibly indicated.

In a possible design, a 1^{st} symbol occupied by a seventh beam in the N different beams is an automatic gain control AGC symbol; a position of the automatic gain control AGC symbol is indicated by the network device, predefined, or preconfigured; and an end position of the seventh beam is determined based on a position of a 1^{st} AGC symbol after the seventh beam and the first time.

According to the foregoing solution, a resource position of a beam may be implicitly indicated by using the AGC symbol, thereby reducing signaling overheads.

In a possible design, the first SCI further indicates that the M CSI-RSs are used for beam management.

In a possible design, a first indicator field of the first SCI indicates that the M CSI-RSs are used for the beam management; or format information of the first SCI indicates that the M CSI-RSs are used for the beam management.

According to the foregoing solution, usage of the CSI-RSs can be more flexibly indicated.

In a possible design, second SCI indicates configuration information of the M CSI-RSs, and the second SCI is carried in first-stage SCI signaling or second-stage SCI signaling. In a possible design, the configuration information of the M CSI-RSs is obtained, where the configuration information of the M CSI-RSs is indicated by the network device; or the configuration information of the M CSI-RSs is predefined or preconfigured.

In a possible design, the first SCI is carried in first-stage SCI signaling or second-stage SCI signaling.

According to a second aspect, a communication method is provided. The method may be performed by a terminal device, or may be performed by a component (for example, a chip or a circuit) in the terminal device. This is not limited in this application. For ease of description, an example in which a second terminal device performs the method is used below for description.

The method may include: receiving first sidelink control information SCI, where the first SCI indicates to send M channel state information reference signals CSI-RSs, and M is a positive integer greater than or equal to 2; and receiving the M CSI-RSs, where the M CSI-RSs belong to a same time unit, the M CSI-RSs include a first CSI-RS and a second CSI-RS, the first CSI-RS is sent by using a first beam, the second CSI-RS is sent by using a second beam, and the first beam and the second beam correspond to different spatial domain parameters.

In the foregoing technical solution, a plurality of CSI-RSs are sent by using different beams in the same time unit, so that a delay of a beam fine-tuning process is greatly shortened under a same quantity of beam sweeping times, thereby well improving SL beam management efficiency.

In a possible design, a beam for sending the first SCI is the same as a beam for sending a third CSI-RS, the third CSI-RS and the first SCI belong to a same time unit, and the third CSI-RS is a 1^{st} CSI-RS in the M CSI-RSs in time domain.

In this way, when the CSI-RS is sent by using a narrow beam, the SCI may be sent by using the narrow beam like the CSI-RS. This helps enlarge coverage of the SCI. Similarly, a receive-end terminal device can also simultaneously receive SCI and a CSI-RS in a same beam, to avoid missing detection of the CSI-RS, and reduce implementation complexity of the receive-end terminal device.

In a possible design, the M CSI-RSs are received in a first time unit by using a same beam.

In a possible design, the M CSI-RSs belong to the first time unit, beams for sending the M CSI-RSs are N different beams, and N is a positive integer greater than or equal to 2.

In comparison with sending by using only one beam in a time unit, in the foregoing solution, a quantity of training beams in the same time unit can be increased, and a beam training speed can be increased.

In a possible design, a time interval between a third beam and a fourth beam in the N different beams is greater than or equal to first time, and the first time is indicated by a network device, predefined, or preconfigured.

In this way, a transmit-end terminal device has time to adjust the beam, thereby reducing implementation complexity of the terminal device.

In a possible design, if a quantity of symbols occupied by one of the N beams is Q, and a quantity of symbols in the first time is P, N*Q+(N-1)*P≤L, where L is a quantity of symbols in the first time unit, and Q, P, and L are all positive integers.

In a possible design, a time domain position of a fourth CSI-RS in the M CSI-RSs is determined based on a start position and a first offset, where the start position is a 1^{st} symbol occupied by a signal sent by using a fifth beam, and the fifth beam is a beam for sending the fourth CSI-RS; or the start position is a 1^{st} symbol in the first time unit for sending the M CSI-RSs, and all of the M CSI-RSs correspond to different offsets.

According to the foregoing solution, a resource position of the CSI-RS can be more flexibly indicated.

In a possible design, a sixth beam in the N beams is used to send a fifth CSI-RS, and identifier information of the sixth beam is determined based on a time domain position of the fifth CSI-RS or the identifier information of the sixth beam is determined based on a resource identifier of the fifth CSI-RS.

According to the foregoing solution, an identifier of a transmit beam may be implicitly indicated, thereby reducing signaling overheads.

In a possible design, a 1^{st} symbol position of a seventh beam in the N different beams is indicated by the network device, predefined, or preconfigured; an end position of the seventh beam is determined based on a 1^{st} symbol position of a 1^{st} beam after the seventh beam and the first time; and a 1^{st} symbol occupied by the seventh beam is used for automatic gain control or receive power adjustment.

According to the foregoing solution, a resource position of the beam can be more flexibly indicated.

In a possible design, a 1^{st} symbol occupied by a seventh beam in the N different beams is an automatic gain control AGC symbol; a position of the automatic gain control AGC symbol is indicated by the network device, predefined, or preconfigured; and an end position of the seventh beam is determined based on a position of a 1^{st} AGC symbol after the seventh beam and the first time.

According to the foregoing solution, a resource position of a beam may be implicitly indicated by using the AGC symbol, thereby reducing signaling overheads.

In a possible design, the first SCI further indicates that the M CSI-RSs are used for beam management.

In a possible design, a first indicator field of the first SCI indicates that the M CSI-RSs are used for the beam management; or format information of the first SCI indicates that the M CSI-RSs are used for the beam management.

According to the foregoing solution, usage of the CSI-RSs can be more flexibly indicated.

In a possible design, second SCI indicates configuration information of the M CSI-RSs, and the second SCI is carried in first-stage SCI signaling or second-stage SCI signaling.

In a possible design, the configuration information of the M CSI-RSs is obtained, where the configuration information of the M CSI-RSs is indicated by the network device; or the configuration information of the M CSI-RSs is predefined or preconfigured.

In a possible design, the first SCI is carried in first-stage SCI signaling or second-stage SCI signaling.

Correspondingly, this application further provides a communication apparatus. The apparatus may implement the communication method according to the first aspect or the second aspect. For example, the apparatus may be a terminal device, or may be another apparatus that can implement the foregoing communication methods. The apparatus may implement the foregoing method by using software, hardware, or hardware executing corresponding software.

In a possible design, the apparatus may include a processor, and the processor is coupled to at least one memory. The processor is configured to support the apparatus in performing a corresponding function in the method according to any one of the foregoing aspects. The memory stores program instructions and data that are necessary for the apparatus. In addition, the apparatus may further include a communication interface, configured to support communication between the apparatus and another apparatus. The communication interface may be a transceiver or a transceiver circuit.

According to another aspect, an embodiment of this application provides a communication system. The system includes the communication apparatus according to the foregoing aspect.

According to another aspect, this application provides a computer-readable storage medium. The computer-readable storage medium stores instructions. When the instructions are run on a computer, the computer is enabled to perform the methods according to the foregoing aspects.

According to another aspect, this application provides a computer program product including instructions. When the instructions are run on a computer, the computer is enabled to perform the method according to any one of the foregoing aspects.

This application further provides a chip system. The chip system includes a processor, and may further include a memory and/or a communication interface. The chip system is configured to implement the method according to any one of the foregoing aspects.

Any apparatus, computer storage medium, computer program product, chip system, or communication system provided above is configured to perform a corresponding method provided above. Therefore, for beneficial effects that can be achieved by the apparatus, the computer storage medium, the computer program product, the chip system, or the communication system, refer to beneficial effects of a corresponding solution in the corresponding method provided above. Details are not described herein again.

### BRIEF DESCRIPTION OF DRAWINGS

FIG. 1(a) to FIG. 1(d) are diagrams of network architectures according to embodiments of this application;
FIG. 2 is a diagram of a communication scenario according to an embodiment of this application;
FIG. 3 is a diagram of another communication scenario according to an embodiment of this application;
FIG. 4 is a diagram of beam alignment according to an embodiment of this application;
FIG. 5 is a diagram of another beam alignment according to an embodiment of this application;
FIG. 6 is a schematic flowchart according to an embodiment of this application;
FIG. 7 is a diagram of beam sending according to an embodiment of this application;
FIG. 8 is a diagram of a resource configuration according to an embodiment of this application;
FIG. 9 is a diagram of another resource configuration according to an embodiment of this application;
FIG. 10 is a diagram of a beam identifier according to an embodiment of this application;
FIG. 11 is a diagram of a communication apparatus according to an embodiment of this application;
FIG. 12 is a diagram of another communication apparatus according to an embodiment of this application;
FIG. 13 is a diagram of still another communication apparatus according to an embodiment of this application; and
FIG. 14 is a diagram of a communication system according to an embodiment of this application.

### DESCRIPTION OF EMBODIMENTS

The following describes technical solutions of this application with reference to the accompanying drawings.

Embodiments of this application may be applied to various communication systems, for example, a global system for mobile communications (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, a long term evolution-advanced (Advanced long term evolution, LTE-A) system, a universal mobile telecommunications system (Universal Mobile Telecommunications System, UMTS), a wireless local area network (Wireless Local Area Network, WLAN), wireless fidelity (Wireless Fidelity, Wi-Fi), or a next-generation new radio NR communication system. Embodiments of this application may be further applied to various future communication systems, for example, a 6th generation (6th generation, 6G) communication system. Specifically, communication methods provided in embodiments of this application may be applied to fields such as vehicle-to-everything (vehicle-to-everything, V2X) communication, the internet of vehicles, self driving, assisted driving, and terminal-to-terminal communication.

The methods and apparatuses provided in embodiments of this application are based on a same or similar technical concept. Because problem-resolving principles of the methods and the apparatuses are similar, mutual reference may be made to implementations of the apparatuses and the methods. Repeated parts are not described.

The following first describes some terms in embodiments of this application, to facilitate understanding of a person skilled in the art.

A network device in embodiments of this application may be a device in a wireless network. For example, the network device may be a device that is deployed in a radio access network and that provides a wireless communication function for a terminal device. For example, the network device may be a radio access network (radio access network, RAN) node that connects the terminal device to the wireless network, and may also be referred to as an access network device.

The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB) a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like; may be a network device in a 5G mobile communication system, for example, a next generation NodeB (next generation NodeB, gNB), a transmission reception point (transmission reception point, TRP), or a TP in an NR system; or is one antenna panel or one group of antenna panels (including a plurality of antenna panels) of a base station in the 5G mobile communication system. Alternatively, the network device may be a network node that forms a gNB or a transmission point, for example, a BBU or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (media access control, MAC) layer, and a physical (physical, PHY) layer. The AAU implements some physical layer processing functions, radio frequency processing, and a function related to an active antenna. The information at the RRC layer is finally changed to the information at the PHY layer, or is changed from the information at the PHY layer. Therefore, in this architecture, higher layer signaling (for example, RRC layer signaling) may also be considered to be sent by the DU, or sent by the DU and the AAU. It may be understood that the network device may be a device including one or more of a CU node, a DU node, and an AAU node. In addition, the CU may be classified as a network device in a RAN, or the CU may be classified as a network device in a core network (core network, CN). This is not limited in this application.

The terminal device in embodiments of this application may be a wireless terminal device that can receive scheduling and indication information from the network device. The terminal device may be a device that provides voice and/or data connectivity for a user, a handheld device with a wireless connection function, or another processing device connected to a wireless modem.

The terminal device is also referred to as user equipment (user equipment, UE), a mobile station (mobile station, MS), a mobile terminal (mobile terminal, MT), or the like. The terminal device is a device that includes a wireless communication function (providing the voice/data connectivity for the user), for example, a handheld device, a vehicle-mounted device, or a vehicle-mounted module that has a wireless connection function. Currently, examples of some terminal devices are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in the internet of vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a device-to-device (device-to-device, D2D) communication terminal device, a vehicle-to-everything communication terminal device, an intelligent vehicle, a telematics box (or referred to as a vehicle-mounted sending unit) (telematics box, T-box), a machine-to-machine/machine-type communications (machine-to-machine/machine-type communications, M2M/MTC) terminal device, an internet of things (internet of things, IoT) terminal device, and the like. For example, the terminal device may be a vehicle-mounted device, an entire vehicle device, a vehicle-mounted module, a vehicle, an on board unit (on board unit, OBU), a roadside unit (roadside unit, RSU), a T-box, a chip, a system on chip (system on chip, SoC), or the like. The chip or the SoC may be mounted in a vehicle, an OBU, an RSU, or a T-box. The wireless terminal in the industrial control may be a camera, a robot, or the like. The wireless terminal in the smart home may be a television, an air conditioner, a sweeper, a speaker, a set-top box, or the like.

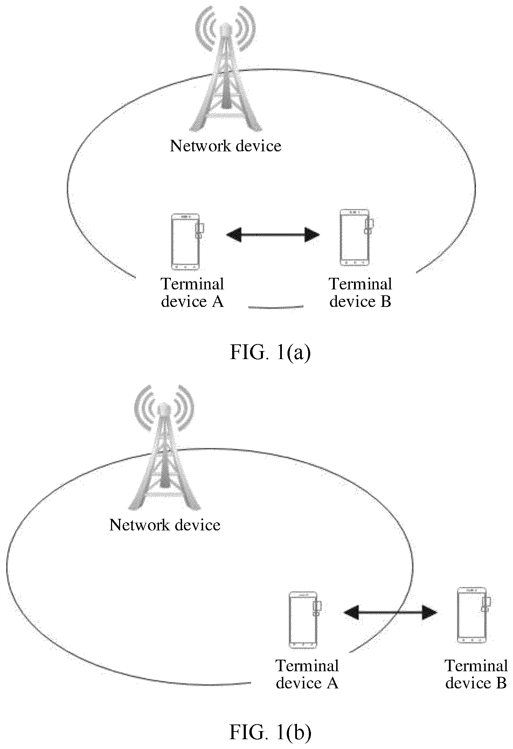

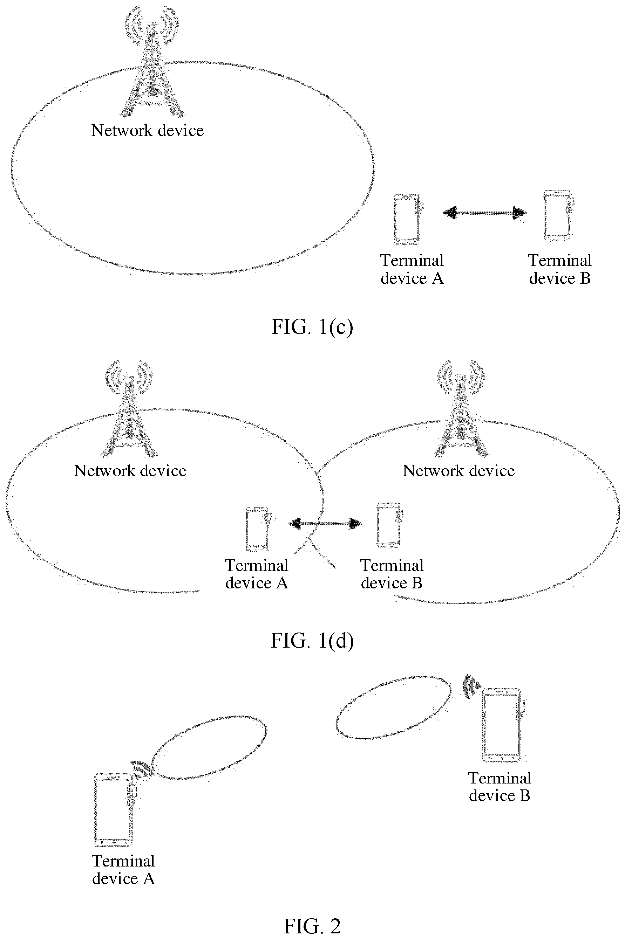

This application is applicable to a scenario in which sidelink communication is supported, and supports a communication scenario with network coverage and a communication scenario without the network coverage. A sidelink may also be referred to as a sidelink, and is referred to as a sidelink in this application. FIG. 1(a) to FIG. 1(d) are diagrams of network architectures applicable to this application. A network system includes at least two terminal devices (a terminal device A and a terminal device B), and may further include a network device. In FIG. 1(a), both the terminal device A and the terminal device B are within signal coverage of the network device. In FIG. 1(b), the terminal device A is within the signal coverage of the network device, but the terminal device B is out of the signal coverage of the network device. In FIG. 1(c), both the terminal device A and the terminal device B are out of the signal coverage of the network device. In FIG. 1(d), the terminal device A and the terminal device B are separately within signal coverage of different network devices.

In scenarios in which the terminal device A is within network coverage in FIG. 1(a), FIG. 1(b), and FIG. 1(d), the terminal device A may perform sidelink communication with the terminal device B in a network device scheduling mode, or may perform communication without using the network device scheduling mode. The terminal device A may perform resource self-selection, that is, select, from a resource pool, a resource used for the sidelink communication. In FIG. 1(c), because the two terminal devices are both out of the coverage, a sidelink can be established only in a resource self-selection manner to perform communication.

It should be understood that the resource in this application is a time-frequency resource. A spectrum used for the sidelink communication may be an unlicensed frequency band, a licensed frequency band, and/or a dedicated frequency band. Before transmission is performed by using the unlicensed frequency band, a regional regulation requirement needs to be met for channel access.

The sidelink communication includes a plurality of usage scenarios, for example, communication between the internet of vehicles and an intelligent terminal. The internet of vehicles is for communication between a vehicle and another vehicle or a device that may affect the vehicle, including vehicle-to-vehicle (Vehicle-to-Vehicle, V2V for short) communication, vehicle-to-pedestrian (Vehicle-to-Pedestrian, V2P for short) communication, vehicle-to-infrastructure (Vehicle-to-Infrastructure, V2I for short) communication, and vehicle-to-network (Vehicle-to-Network, V2N for short) communication. Communication between intelligent terminals is typically, for example, communication between a mobile phone and a wearable device, communication between an AR/VR helmet or glasses and a smart screen, and communication between sensors.

V2V is a special case in V2X, and focuses on sidelink communication between vehicles. Through V2V communication, a vehicle on a road may obtain traveling information, sensor information, and the like of another vehicle in real time. In a vehicle platooning (vehicle platooning) service, a vehicle at a head of a platoon sends vehicle operation information to the platoon in a V2V manner, so that subsequent vehicles implement unmanned driving. For an extended sensor (extended sensor), after sensing another vehicle, a vehicle notifies the another vehicle of sensor information through V2V, to resolve a problem of environment perception is inaccurate because a sensor capability of the vehicle is limited.

In addition to vehicle communication, communication between terminal devices is also one of important application scenarios of a sidelink communication technology. As shown in FIG. 2, two terminals need to complete a beam alignment process before communication. However, when a beam is wide, beam energy that can be concentrated is limited for the terminals. In this case, a distance between the terminals that can perform communication is limited. When a beam is narrow, beam energy to be concentrated is large, but effective calibration can be implemented only after more times of beam training.

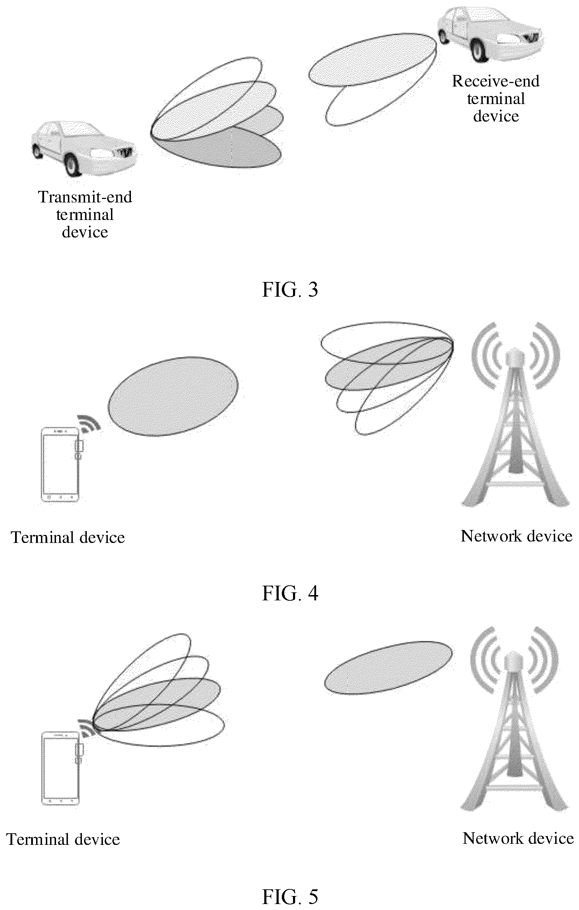

The present invention is applicable to a scenario in which a transmit-end terminal device needs to perform transmit beam training and a receive-end terminal device needs to perform receive beam training on a sidelink. The scenario of performing transmit end beam training is described by using a V2X scenario in FIG. 3 as an example. Important elements in the scenario are explained as follows.

The transmit-end terminal device is an information sending entity on a V2X sidelink. In FIG. 3, a vehicle terminal device is used as an example.

The receive-end terminal device is an information receiving entity on the V2X sidelink. In FIG. 3, a vehicle terminal device is used as an example.

Transmit beam: The beam is sent in a directional radiation mode by an antenna port on the transmit-end terminal device. FIG. 3 shows transmit beams in four directions, which are represented in different colored droplet shapes.

Receive beam: The beam is received in a directional radiation mode by an antenna port on the receive-end terminal device. FIG. 3 shows receive beams in two directions, which are represented in different colored droplet shapes.

The following first explains and describes related technical features in embodiments of this application. It should be noted that these explanations are intended to facilitate understanding of embodiments of this application, but should not be considered as a limitation on the protection scope claimed in this application.

### Beam management:

In an evolution process of wireless communication, beamforming based on multiple-input multiple-output MIMO is an important aspect. The beamforming may be considered as a spatial filtering process. A technical principle of the beamforming is to limit signal sending or receiving within a specific angle range, to increase a gain and reduce interference. The beamforming has appeared in a 2G system, and is implemented by selecting different transmit or receive antennas. In contrast, in 3G and later communication systems, a phased array (phased array) is preferred to be used to implement the beamforming. To efficiently and properly perform beamforming, a beam management process is designed in NR. The beam management is an important technology proposed for the beamforming in the NR system. In Un communication, the beam management enables the network device and the terminal device to obtain and maintain a beam set used for sending and receiving, to implement high-gain communication by using an appropriate beam pair. In this application, a Uu air interface or the Uu communication is an air interface or communication between the network device and the terminal device. It may be understood that, unless otherwise specified, in the present invention, a definition of the Uu air interface may be the same as that defined in a 3GPP standard protocol. For a downlink (Downlink, DL), the beam management may be divided into three phases (P-1, P-2, and P-3), and operations in the phases are summarized as follows:
P-1: The terminal device measures different beams sent by the network device, to support selection of transmit beams of the network device and receive beams of the terminal device.
P-2: Based on P-1, the terminal device measures different beams sent by the network device, to improve the transmit beam of the network device. In this step, the beam sent by the network device may be narrower or denser than the beam in P-1. This is used for beam refinement.
P-3: The terminal device measures the transmit beams of the same network device by using different receive beams, to improve the receive beam of the terminal device.
Phases P-1 and P-2 are processes in which the network device performs transmit beam training, and a used reference signal may be a channel state information reference signal (Channel State Information Reference Signal, CSI-RS) sent by the network device. In an interface between the terminal device and the network device in NR, configuration freedom of the CSI-RS is very high. A time domain position, a frequency domain position, a bandwidth, a periodicity, and the like of the CSI-RS may be configured, and different configuration methods correspond to different CSI-RS resources. Basic working procedures of P-1 and P-2 are as follows: The network device configures several beam directions, and each beam direction corresponds to one CSI-RS resource (resource). The network device sequentially sends CSI-RSs in directions in a sweeping manner. In addition, the network device sends a CSI-RS resource only in a single beam direction in a time unit. The terminal device performs beam measurement to obtain reference signal received power (Reference Signal Received Power, RSRP) of the CSI-RSs, and obtains channel state information reference signal resource indicators (CSI-RS Resource Indicators, CRIs) of the CSI-RSs. After comparing RSRP, the terminal device selects one or more RSRP values and a corresponding CRI, and reports the one or more RSRP values and the corresponding CRI to the network device. The network device determines, by using report information, a transmit beam that should be used.

Corresponding to P-1 and P-2, a similar procedure is also used for uplink beam management, but a different reference signal is used. The network device can determine an optimal transmit beam through processes P-1 and P-2.

For the process P-3, the network device performs sending by using the optimal beam, and the terminal device receives, by using receive beams in different directions, a CSI-RS that is in a same direction and that is sent by the network device, so that the terminal device can determine an optimal receive beam of the terminal device.

The following specifically describes a possible downlink beam management process in NR Uu communication.

Coarse alignment in a process P-1: The network device performs synchronization signal block (Synchronization Signal Block, SSB) beam sweeping, and the terminal device performs wide beam sweeping.
(1) A quantity of beam sweeping times needed by the terminal device to determine an optimal SSB beam of the network device is related to a quantity of base station SSB beams, a quantity of UE beams, a UE beam sweeping algorithm, and the like. As shown in FIG. 4, the terminal device first receives, by using a wide beam, SSB beams sent by the network device. The network device changes directions of the SSB beams at different moments, and the terminal device measures information such as received strength in different directions, to determine an optimal SSB beam in this case.
(2) The network device side determines an SSB beam for sending a downlink signal. The following separately provides descriptions based on two states.

In an idle state initial access phase, the terminal device includes SSB index information of the optimal SSB beam in a random access preamble and feeds back the SSB index information of the optimal SSB beam to the network device, and the network device determines the SSB beam for sending the downlink signal. When receiving an uplink signal, the network device may directly reuse the beam.

In a connected state data transmission phase, the terminal device feeds back an SSB measurement result to the network device by using a measurement report, and the network device determines the SSB beam for sending the downlink signal. When receiving an uplink signal, the network device may directly reuse the beam.

(3) The terminal device side determines a wide beam for receiving a downlink signal.

When receiving a signal, the terminal device receives and measures the signal in a beam sweeping manner based on an SSB time-frequency resource position notified in a system message (the idle state initial access phase) or an RRC reconfiguration message (the connected state data transmission phase), to determine the wide beam used by the terminal device to receive the downlink signal. When sending an uplink signal, the terminal device may directly reuse the beam.

Fine-tuning performed by the network device in a process P-2: The network device performs CSI-RS beam sweeping.
(1) The network device performs sweeping again by using a narrower CSI-RS beam near the optimal SSB beam (the network device may perform mapping between a CSI-RS beam to the optimal SSB beam by using a beam ID).
(2) The terminal device feeds back a CSI-RS measurement result to the network device by using a measurement report, and the network device determines a CSI-RS beam for sending a downlink signal. When receiving an uplink signal, the network device may directly reuse the beam.

Fine-tuning performed by the terminal device in a process P-3: The terminal device performs narrow beam sweeping.

As shown in FIG. 5, the CSI-RS beam of the network device is fixed. When receiving the signal, the terminal device receives and measures the signal in the beam sweeping manner based on a CSI-RS time-frequency resource position notified in an RRC configuration message of the network device, to determine a narrow beam used by the terminal device to receive a downlink signal. When sending an uplink signal, the terminal device may directly reuse the beam.

In this application, a PC5 air interface is an air interface between the terminal devices, and PC5 communication is communication between the terminal devices. It may be understood that, unless otherwise specified, in the present invention, a definition of the PC5 air interface may be the same as that defined in the 3GPP standard protocol.

Similarly, when the beam management process in the Uu communication is applied to the PC5 communication, a possible beam management method is (manner 1):
P-1: A terminal device 2 measures different beams sent by a terminal device 1, to support selection of transmit beams of the terminal device 1 and receive beams of the terminal device 2; and in this process, the terminal device 1 may perform beam training by using an S-SSB reference signal. In this application, the S-SSB may be understood as an SL SSB. Correspondingly, the terminal device 2 reports optimal beam information of the terminal device 1.
P-2: Based on P-1, the terminal device 2 measures different beams sent by the terminal device 1, to improve the transmit beam of the terminal device 1. In this step, the beam sent by the terminal device 1 may be narrower or denser than the beam in P-1. This is used for beam refinement; and in this process, the terminal device 1 may perform beam training by using an SL-CSI-RS reference signal. Correspondingly, the terminal device 2 reports optimal beam information of the terminal device 1.
P-3: The terminal device 2 measures the transmit beams of the terminal device 1 by using different receive beams, to improve the receive beam of the terminal device 2. In this process, the terminal device 1 may perform beam training by using an SL-CSI-RS reference signal.

When the beam management process in the Uu communication is applied to the PC5 communication, another possible beam management method is (manner 2):
P-1: A terminal device 2 measures different beams sent by a terminal device 1, to support selection of transmit beams of the terminal device 1 and receive beams of the terminal device 2; and in this process, the terminal device 1 may perform beam training by using an S-SSB reference signal. Correspondingly, the terminal device 2 reports optimal beam information of the terminal device 1.
P-2: The terminal device 1 measures the transmit beams of the terminal device 2 by using different receive beams, to improve the receive beam of the terminal device 1. In this process, the receive beam of the terminal device 1 may be narrower or denser than the transmit beam of the terminal device 1 in P-1, and the terminal device 2 may perform beam training on the terminal device 1 by using an SL-CSI-RS reference signal.
P-3: The terminal device 2 measures the transmit beams of the terminal device 1 by using different receive beams, to improve the receive beam of the terminal device 2. In this process, the receive beam of the terminal device 2 may be narrower or denser than the receive beam of the terminal device 2 in P-1, and the terminal device 1 may perform beam training by using an SL-CSI-RS reference signal.

Optionally, steps P-2 and P-3 in the beam management manner (manner 2) may be exchanged in execution manners. In other words, an execution sequence of steps P-2 and P-3 may be P-2 first and then P-3, or P-3 first and then P-2.

When the beam management process in the Uu communication is applied to the PC5 communication, another possible beam management method is (manner 3):
P-1: A terminal device 2 measures different beams sent by a terminal device 1, to support selection of transmit beams of the terminal device 1 and receive beams of the terminal device 2; and in this process, the terminal device 1 may perform beam training by using an S-SSB reference signal. Correspondingly, the terminal device 2 reports optimal beam information of the terminal device 1.
P-2: The terminal device 2 measures different beams sent by the terminal device 1, to improve the transmit beam of the terminal device 1. In this step, the beam sent by the terminal device 1 may be narrower or denser than the beam in P-1. This is used for beam refinement; and in this process, the terminal device 1 may perform beam training by using an SL-CSI-RS reference signal. Correspondingly, the terminal device 2 reports optimal beam information of the terminal device 1
P-3: The terminal device 1 measures different beams sent by the terminal device 2, to improve the transmit beam of the terminal device 2. In this step, the beam sent by the terminal device 2 may be narrower or denser than the receive beam of the terminal device 2 in P-1. This is used for beam refinement; and in this process, the terminal device 2 may perform beam training by using an SL-CSI-RS reference signal. Correspondingly, the terminal device 1 reports optimal beam information of the terminal device 2.

Optionally, steps P-2 and P-3 in the beam management manner (manner 2) may be exchanged in execution manners. In other words, an execution sequence of steps P-2 and P-3 may be P-2 first and then P-3, or P-3 first and then P-2.

In the foregoing three possible PC5 communication beam training processes, a main difference lies in whether the optimal beam information needs to be reported to the other party in the process P-2 or P-3. For example, in P-2 in Manner 1, the terminal device 2 further needs to report the optimal beam information of the terminal device 1. However, in P-2 in Manner 2, the terminal device 2 does not need to report the optimal beam information of the terminal device 1.

In the foregoing three possible PC5 communication beam training processes, through wide beam alignment in the process P-1, the terminal device 1 and the terminal device 2 may respectively determine an optimal transmit beam and an optimal receive beam based on the S-SSB reference signal. In the subsequent processes P-2 and P-3, the terminal device 1 and the terminal device 2 may determine the optimal beams based on P-1, and then further train information such as a beam direction and a beam width based on this, to obtain beam information with a narrower or more accurate direction, thereby improving communication efficiency of an SL terminal in an FR2 frequency band.

### Sidelink CSI-RS:

The sidelink CSI-RS is aperiodically reported, and the CSI-RS needs to be first triggered by a terminal device of one party. The triggering is carried in a "CSI request" field in a sidelink control information (Sidelink Control Information, SCI) format 2-A. The sidelink CSI-RS is channel-associated data, that is, needs to be sent together with higher layer data carried on a physical sidelink shared channel (Physical Sidelink Shared Channel, PSSCH), for example, a medium access control (Media Access Control, MAC) service data unit (Service Data Unit, SDU).

Transmission of sidelink CSI is shown as follows.
(1) First, a CSI-RS pattern is configured via PC5-RRC.
(2) The transmit-end terminal device sets a value of the "CSI request" field to 1 in the SCI format 2-A, to trigger a CSI transmission step, and the receive-end terminal device performs transmission of the sidelink CSI-RS on the PSSCH.
(3) The receive-end terminal device feeds back CSI information via a media access control control element (Media Access Control control element, MAC CE).

In a possible implementation, considering that information about the CSI-RS needs to be obtained by decoding information about SCI, and a user movement problem is also considered, a wide beam is used for sending on a control channel, and a narrow beam is used for sending on a data channel after the control channel. Beam management of an interface between the terminal device and the network device is implemented based on an extremely flexible CSI-RS framework and a powerful MIMO capability of the network device. For the V2X SL, a reference signal SL CSI-RS corresponds to a CSI-RS. The reference signal is an SL-specific reference signal, and a basic function of the reference signal is to measure a channel on the SL, to calculate a rank indicator (Rank Indicator, RI) and a channel quality indicator (Channel Quality Indicator, CQI) of the channel, and help a transmit end determine parameters such as a sending manner, a modulation order, and a code rate. However, if the SL CSI-RS is directly used for SL beam management, there are problems of inefficiency and long beam training time. The SL CSI-RS is a channel-associated signal, and needs to be sent together with data. However, in a beam training process, beams of the transmit end and a receive end are not calibrated. In this case, data may not be correctly sent. In addition, one piece of existing SCI can indicate information about only one CSI-RS beam, and cannot indicate information about a plurality of CSI-RS beams. In addition, existing SL beam training occupies one slot. Because beam training needs to be performed in both processes P-2 and P-3, training duration is long.

To resolve the foregoing problem, an embodiment of this application provides an SL CSI-RS resource configuration method, to configure a more appropriate SL CSI-RS in an SL scenario, so that SL beam management is performed more efficiently.

The following describes technical solutions in embodiments of the present invention with reference to the accompanying drawings in embodiments of the present invention.

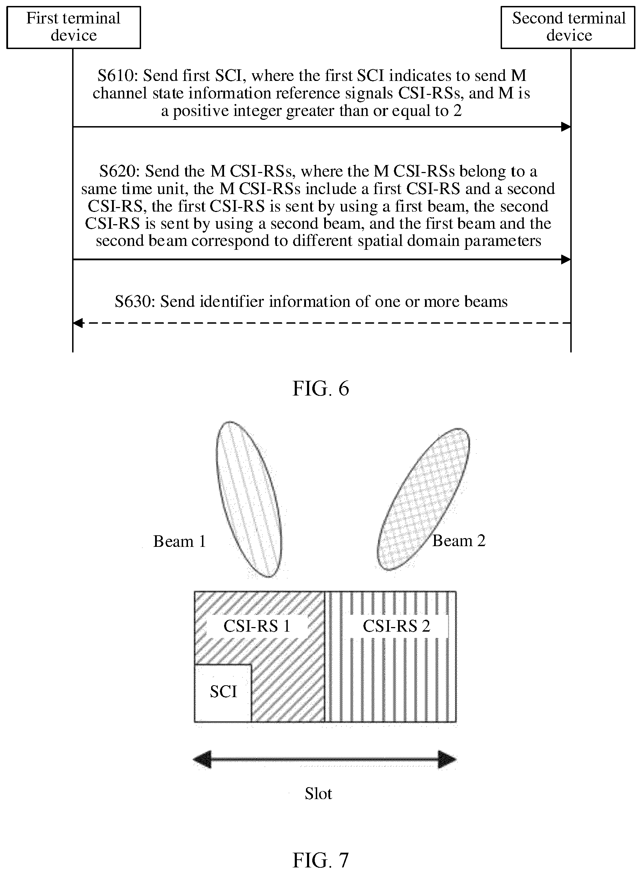

FIG. 6 is a diagram of an example of a communication method according to an embodiment of this application. The method 600 may include S610 to S630. The method may be performed by a terminal device and a network device, or may be performed by a chip in the terminal device and a chip in the network device. It should be understood that FIG. 6 shows steps or operations in the communication method, but these steps or operations are merely examples. In this embodiment of this application, other operations or variations of the operations in FIG. 6 may be further performed, or appropriate switching between steps may be performed.

S610: A first terminal device sends first SCI.

The first SCI indicates sending of M channel state information reference signals CSI-RSs, and M is a positive integer greater than or equal to 2.

Correspondingly, a second terminal device receives the first SCI.

For example, the first SCI may indicate sending of two or four CSI-RSs by the first terminal device. After receiving the first SCI, the second terminal device may learn that the two or four CSI-RSs need to be received. Optionally, the first SCI is used to trigger sending of the M CSI-RSs.

In a possible implementation, the first SCI is carried in first-stage SCI signaling or second-stage SCI signaling. For example, the first SCI may be carried in the first-stage SCI signaling. Because first-stage SCI is carried in first several symbols in a slot, the second terminal can obtain the first SCI through decoding more quickly, to learn of the information about the CSI-RSs. For another example, the first SCI is carried in the first-stage SCI signaling, and the first SCI indicates the sending of the CSI-RSs. In a conventional technology, because a "CSI request" field is carried in an SCI 2-A format, and only when an ID of receive-end UE corresponds to a destination address in SCI 2-A, a CSI measurement process between two terminals is triggered. In this case, when first-stage SCI is used to carry beam measurement related to the CSI-RSs, because the first-stage SCI can be received and decoded by a plurality of users, after the first SCI is carried in the first-stage SCI, a process of transmitting the CSI-RSs is not limited to unicast, or may be multicast or broadcast, and a process of beam management and beam communication is not limited to the unicast, or may be the multicast or the broadcast.

In this application, that the first SCI is carried in the first-stage SCI signaling may also be understood as that the first SCI is the first-stage SCI.

In an implementation, the symbol in this application may be an orthogonal frequency division multiplexing (orthogonal frequency division multiplexing, OFDM) symbol.

In a possible implementation, the first SCI further indicates configuration information of the M CSI-RSs. In another implementation, the first terminal device sends second SCI, where the second SCI indicates configuration information of the M CSI-RSs. Correspondingly, the second terminal device receives the second SCI. In an implementation, the second SCI is carried in first-stage SCI signaling or second-stage SCI signaling. For example, the first SCI is carried in the first-stage SCI signaling, and the second SCI is carried in the second-stage SCI signaling. Optionally, the second SCI may be sent before the first SCI.

In another possible implementation, the configuration information of the CSI-RSs may alternatively be obtained through indication by the network device or in a manner predefined in a protocol. For example, the first terminal device and/or the second terminal device may obtain the configuration information of the M CSI-RSs through the indication by the network device. For another example, the first terminal device and/or the second terminal device obtains the configuration information of the M CSI-RSs in a predefined or preconfigured manner. In another possible implementation, the configuration information of the M CSI-RSs may alternatively be carried in a MAC CE. In this way, the first SCI only indicates the sending of the M CSI-RSs, and does not need to carry the configuration information of the CSI-RSs.

The configuration information of the CSI-RSs may include one or more of the following: time domain resource positions of the CSI-RSs, frequency domain resource positions, a quantity of ports, identifier information, usage, mode information, a CSI-RS periodicity, time domain or frequency domain offsets of the CSI-RSs, and whether beam sending is repeatedly performed.

In a possible implementation, the configuration information of the CSI-RSs or the first SCI may further indicate whether a plurality of CSI-RSs within one slot are sent by using a same beam; or the configuration information of the CSI-RSs or the first SCI may further indicate whether a plurality of CSI-RSs within one slot are sent by using a same spatial domain parameter.

In a possible implementation, the first SCI further indicates whether there is a CSI-RS signal in a slot. For example, the first SCI includes 1-bit indication information, indicating whether there is a CSI-RS signal in a slot in which the first SCI is located.

In a possible implementation, the first SCI further indicates the usage of the CSI-RSs. The usage of the CSI-RSs may be indicated explicitly or implicitly. For example, the first SCI further indicates that the M CSI-RSs are used for beam management, beam training, or channel information obtaining. Optionally, the indication may be performed by using an indicator field or format information of the first SCI or third SCI. For example, a first indicator field of the first SCI indicates that the M CSI-RSs are used for the beam management; the format information of the first SCI indicates that the M CSI-RSs are used for the beam management; or the format information of the third SCI indicates that the M CSI-RSs are used for the beam management. Optionally, the third SCI is carried in second-stage SCI signaling. Optionally, the third SCI is indicated by the first SCI, and the first SCI is the first-stage SCI. Optionally, the first terminal device sends the third SCI. Correspondingly, the second terminal device receives the third SCI. The beam management in this application may be replaced with determining a spatial domain parameter or determining a beam.

In this way, the second terminal device may adjust different slot structures or usage based on the indication information in the SCI, to implement targeted receiving.

S620: The first terminal device sends the M CSI-RSs.

Correspondingly, the second terminal device receives the M CSI-RSs.

The M CSI-RSs belong to a same time unit, the M CSI-RSs include a first CSI-RS and a second CSI-RS, the first CSI-RS is sent by using a first beam, and the second CSI-RS is sent by using a second beam. The first beam and the second beam correspond to different spatial domain parameters. That the spatial domain parameters of the two beams are different may be understood as that the two beams are different, beam directions of the two beams are different, identifiers of the two beams are different, beam widths of the two beams are different, or the two beams are beams formed by using different spatial domain filters. In other words, the first CSI-RS and the second CSI-RS are sent by using different spatial domain parameters or different spatial domain filters.

One CSI-RS resource herein occupies one or more symbols. One beam herein lasts on one or more symbols.

That is, the reference signals are sent in different beam directions, so that the second terminal device can measure the reference signals in the different directions, and further select an appropriate beam direction, to implement beam training.

That the plurality of CSI-RSs belong to a same time unit may be understood as that time-frequency resources of the plurality of CSI-RSs are located in the same time unit, or the plurality of CSI-RSs are sent in the same time unit.

The first time unit in this application may be a slot, a subframe, or a frame. For example, the M CSI-RSs belong to a same slot. For another example, when M is 3, it indicates that three different CSI-RSs may be sent in one slot. For another example, as shown in FIG. 7, one piece of SCI indicates sending of a CSI-RS 1 and a CSI-RS 2 within one slot, and the two CSI-RSs are sent by using different beams. A beam 1 is used for the CSI-RS 1, and a beam 2 is used for the CSI-RS 2. In this way, a plurality of CSI-RSs are sent in a same slot, so that more measurement is performed within short time, and beam training is performed more quickly.

Optionally, because the M CSI-RSs are sent in different beam directions, the second terminal device may receive only a part of the CSI-RSs.

It should be noted that the first SCI and the M CSI-RSs may be sent in any sequence. For example, the first SCI may be sent before a part or all of the M CSI-RSs. For another example, the first SCI may be sent after a part or all of the M CSI-RSs. For another example, the first SCI may be simultaneously sent with a part or all of the M CSI-RSs. For another example, the first SCI and one of the M CSI-RSs may be sent on a same symbol.

In a possible implementation, a beam for sending the first SCI is the same as a beam for sending the third CSI-RS. The third CSI-RS and the first SCI belong to a same time unit, and the third CSI-RS is a 1^{st} CSI-RS in the M CSI-RSs in time domain. In this application, that the beams for sending two signals are the same may be understood as that the two signals are sent by using a same spatial domain parameter, or the two signals are sent by using a same spatial domain filter. Optionally, the first SCI and the third CSI-RS completely or partially overlap in time domain. For example, as shown in FIG. 7, the SCI and the CSI-RS 1 may be sent by using a same beam, and the CSI-RS 1 is sent by using a 1^{st} beam for sending the SCI within a time unit (for example, the slot).

When the CSI-RS is sent by using a narrow beam, the first SCI may be sent by using the narrow beam like the CSI-RS. This helps enlarge maximum coverage of the first SCI.

In a possible implementation, the first terminal device sends the M CSI-RSs in a first time unit by using N different beams, where N is a positive integer greater than or equal to 2.

In a possible implementation, the second terminal device receives the M CSI-RSs in the first time unit by using a same receive beam.

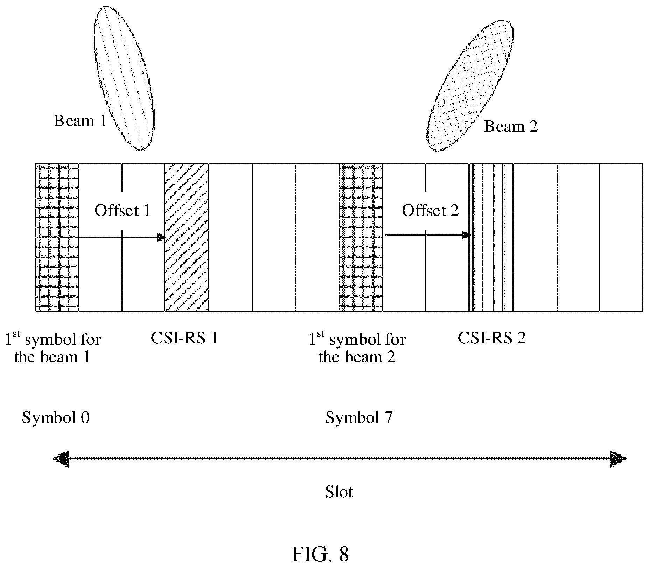

In a possible implementation, a time interval between two adjacent beams in the N different beams in time domain is greater than or equal to first time. For example, a time interval between a third beam and a fourth beam in the N beams is greater than or equal to the first time. For example, if the beam 1 and the beam 2 are two adjacent beams in time domain, a time interval between the two beams is greater than or equal to the first time. For example, as shown in FIG. 8, symbols occupied by a beam 1 are a symbol 0 to a symbol 3, symbols occupied by a beam 2 are a symbol 7 to a symbol 10, first time may be three symbols, and a time interval between the beam 1 and the beam 2 is greater than or equal to the three symbols. In an implementation, the first time is indicated by the network device, predefined, or preconfigured. For example, the first time may be greater than or equal to one symbol. For another example, the first time is in a unit of microseconds or milliseconds. For example, the first time is 35 microseconds. In another implementation, the first time is time needed for beam switching when the first terminal device sends a signal. When CSI-RSs are sent by using two different beams, a specific gap needs to be reserved between two CSI-RS resources, and the gap needs to meet a requirement on beam switching time. That is, the gap needs to be greater than or equal to the first time. The first terminal device does not send data within the first time. For example, as shown in FIG. 8, the first terminal device does not send data on the symbols 4, 5, and 6. In another implementation, the first time may be reported by the first terminal device. In another implementation, the first time may be related to a subcarrier spacing of a resource in which a signal is sent. In another implementation, the first time is a value greater than the beam switching time. Optionally, a time interval is also needed between two adjacent CSI-RSs in time domain. For a feature of the time interval, refer to the time interval between the beams. Details are not described again.

In a possible implementation, if a quantity of symbols occupied by one of the N beams is Q, and a quantity of symbols in the first time is P, N*Q+(N-1)*PL. Q, P, and L are positive integers. In another possible implementation, duration of the first time is zero or P is equal to zero.

In a possible implementation, a quantity of symbols occupied by one of the N beams is L/N. N can be exactly divided by L.

In another possible implementation, a quantity of symbols occupied by a 1^{st} beam or a last beam in the N beams is L-floor(L/N)*(N-1), where N cannot be exactly divided by L. floor (L/N) indicates a maximum integer that is not greater than L divided by N. In this case, a quantity of symbols occupied by another beam in the N beams is floor (L/N).

L is a quantity of symbols in the first time unit.

For example, L=14, and N=2. In this case, duration of each beam is less than or equal to seven symbols. In this case, when a 1^{st} symbol occupied by a 1^{st} beam is a symbol 0, a 1^{st} symbol occupied by a 2^{nd} beam is any one of a symbol 7 to a symbol 13.

In a possible implementation, at least two of the N beams occupy different quantities of symbols. For example, a beam occupies two symbols, and another beam occupies three symbols.

In a possible implementation, a time domain position of one of the M CSI-RSs is determined based on a start position and a first offset, and the start position is a 1^{st} symbol occupied by a beam for sending the CSI-RS or a 1^{st} symbol in the first time unit. For example, a time domain position of a fourth CSI-RS in the M CSI-RSs is determined based on a start position and a first offset. The start position is a 1^{st} symbol occupied by a signal sent by using a fifth beam, and the fifth beam is a beam for sending the fourth CSI-RS; or the start position is a 1^{st} symbol in the first time unit for sending the M CSI-RSs, and all of the M CSI-RSs correspond to different offsets. The start position herein may alternatively be replaced with a first reference point.

In a possible implementation, the plurality of CSI-RSs may be indicated by using a first offset. For example, there are two CSI-RSs in one slot, the two CSI-RSs correspond to a same first offset, and the first offset indicates a position of each CSI-RS resource relative to a 1^{st} symbol on which the CSI-RS is sent by using a beam. This manner is simple, and low signaling overheads are needed. In other words, if beams for sending all of the M CSI-RSs are different, all of the M CSI-RSs may be indicated by using a same first offset. For example, as shown in FIG. 8, a first offset of a CSI-RS 1 is the same as a first offset of a CSI-RS 2, that is, an offset 1 and an offset 2 are the same, and are both three symbols. A first reference point of the CSI-RS 1 is a 1^{st} symbol on which the CSI-RS 1 is sent by using a beam 1, and a first reference point of the CSI-RS 2 is a 1^{st} symbol on which the CSI-RS 2 is sent by using a beam 2.

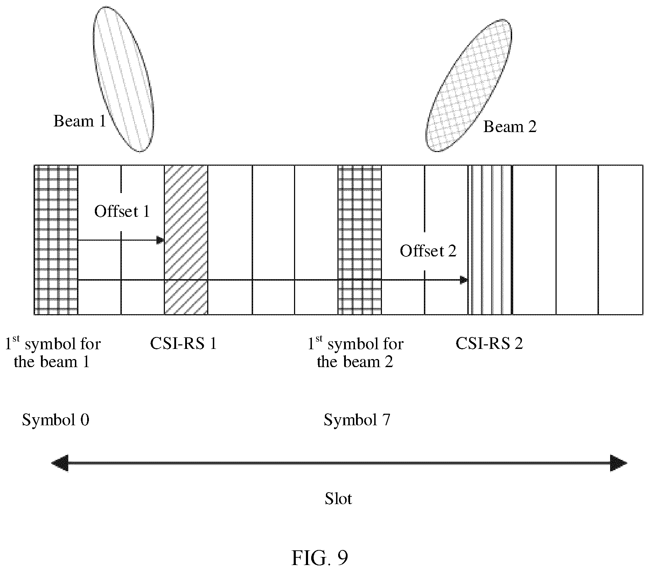

In another possible implementation, each CSI-RS has a corresponding first offset. For example, there are two CSI-RSs in one slot, which respectively correspond to two first offsets. The 1^{st} first offset is an offset of the 1^{st} CSI-RS relative to a 1^{st} symbol in the slot, and the 2^{nd} first offset is an offset of the 2^{nd} CSI-RS relative to the 1^{st} symbol in the slot. For example, as shown in FIG. 9, a CSI-RS 1 and a CSI-RS 2 correspond to different first offsets, which are respectively an offset 1 and an offset 2. First reference points of the CSI-RS 1 and the CSI-RS 2 are both a 1^{st} symbol in a slot in which the CSI-RS is located. For another example, there are two CSI-RSs in one slot, which respectively correspond to two first offsets. The 1^{st} first offset is an offset of the 1^{st} CSI-RS relative to a 1^{st} symbol on which the 1^{st} CSI-RS is sent by using a beam, the 2^{nd} first offset is an offset of the 2^{nd} CSI-RS relative to a 1^{st} symbol on which the 2^{nd} CSI-RS is sent by using a beam.

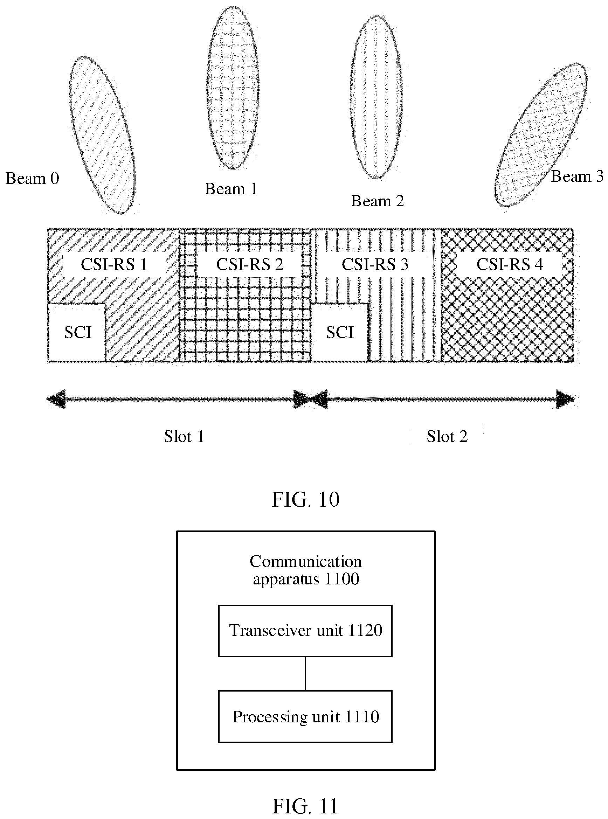

In a possible implementation, identifier information of a beam for sending a CSI-RS is determined based on a time domain position or a resource identifier of the CSI-RS. That is, a sixth beam in the N beams is used to send a fifth CSI-RS, and identifier information of the sixth beam is determined based on a time domain position of the fifth CSI-RS or the identifier information of the sixth beam is determined based on a resource identifier of the fifth CSI-RS. For example, a CSI-RS resource identifier #1 corresponds to a beam 1, and a CSI-RS resource identifier #2 corresponds to a beam 2. Others are similar. That is, the CSI-RS resource identifier #2 corresponds to a spatial domain parameter (including a beam width, a beam direction, or the like) corresponding to the beam 2. Identifier information of a beam for sending a CSI-RS or a number of the beam for sending the CSI-RS may be explicitly indicated, for example, is carried in configuration information of the CSI-RS; or may be implicitly indicated. For example, a slot number and/or a symbol number are/is bound to a number of a beam for sending the CSI-RS. In this case, a receive-end terminal device may obtain corresponding CSI-RS beam information by using the current slot number and/or the current symbol number. For example, if a beam sending periodicity is X slots, when there are two beams for sending CSI-RSs within one slot, identifier information of the beams, namely, a beam 0 to a beam 2*X-1, may be sequentially obtained in a time sequence by numbering the beams. For example, as shown in FIG. 10, an identifier of a 1^{st} beam in a slot 1 is a beam 0, an identifier of a 2^{nd} beam in the slot 1 is a beam 1, an identifier of a 1^{st} beam in a slot 2 is a beam 2, and an identifier of a 2^{nd} beam in the slot 2 is a beam 3. For another example, as shown in FIG. 7, the beam 1 is used for sending on a symbol in a first half of the slot, and the beam 2 is used for sending on a symbol in a second half of the slot. In this way, when receiving the CSI-RSs, the receive-end terminal device can learn, by using the first seven symbols in the slot 1, that the CSI-RS is sent by using the beam 1, and can learn, by using the last seven symbols in the slot 1, that the CSI-RS is sent by using the beam 2. When subsequently feeding back the CSI-RS beam information, the receive-end terminal device may obtain beam identifier information based on a received slot and symbol position for feedback.

In a possible implementation, positions of 1^{st} symbols occupied by different beams in the N different beams are indicated by the network device, predefined, or preconfigured. That is, a 1^{st} symbol position of a seventh beam in the N different beams is indicated by the network device, predefined, or preconfigured. Optionally, an end position of the seventh beam is determined based on a 1^{st} symbol position of a 1^{st} beam after the seventh beam and the first time. The end position of the seventh beam herein may alternatively be replaced with a position of a last symbol occupied by the seventh beam. That is, a start position of a beam in time domain is indicated by directly indicating a position of a 1^{st} symbol in the beam. In addition, an end position of the beam in time domain is also determined based on the beam switching time. For example, if there are at least two beams within one slot, a 1^{st} symbol for the 2^{nd} beam is a symbol 7, and the first time is two symbols, it may be learned that an end position for the 1^{st} beam is a symbol 5. Optionally, a 1^{st} symbol occupied by the seventh beam is used for automatic gain control or receive power adjustment. For example, when there are a plurality of beams within one slot, a symbol on which duration is occupied for each beam may be used as an automatic gain control (Automatic Gain Control, AGC) symbol.

In another possible implementation, the time domain position of the beam may alternatively be determined based on a position of an AGC symbol. For example, it may be predefined, indicated, or preconfigured that the 1^{st} symbol occupied by the seventh beam is the AGC symbol, and the position of the AGC symbol is indicated by the network device, predefined, or preconfigured. Optionally, an end position of the seventh beam is determined based on a position of a 1^{st} AGC symbol after the seventh beam and the first time.

Optionally, if a symbol is used for the automatic gain control or the receive power adjustment, data or a signal on the symbol may be a copy of data or a signal on a 1^{st} symbol after the symbol.

In this application, a start position of a beam may be replaced with a 1^{st} symbol occupied by the beam or the 1^{st} symbol for the beam. An end position of a beam may be replaced with a last symbol occupied by the beam or the last symbol for the beam.

In a possible implementation, the M CSI-RSs and the service data are not sent simultaneously. For example, the service data may be described as a MAC protocol data unit (Protocol Data Unit, PDU), and includes (one or more) MAC SDUs and/or (one or more) MAC CEs. In other words, the first SCI does not indicate the sending of the MAC SDU. In other words, the first SCI only indicates the sending of the M CSI-RSs. In a possible implementation, the CSI-RSs are sent together with other information, for example, the MAC CE. Particularly, in CSI-RS beam training, in addition to SCI (for example, the first-stage SCI or second-stage SCI) and a CSI-RS signal, other data or signal may be further transmitted on another symbol. However, the data or the signal is not data from the MAC SDU, and may be from the MAC CE.

In another possible implementation, the CSI-RSs and the service data are sent simultaneously. When the CSI-RSs and the service data are sent simultaneously, data of only one transport block (transport block, TB) may be sent in one slot, data of one TB may be sent by using several beams, or data of one TB may be sent by using each beam.

S630: The first terminal device receives identifier information of one or more beams.

Correspondingly, the second terminal device sends the identifier information of the one or more beams. The one or more beams herein are the beams used to send the M CSI-RSs.

The second terminal device measures the M CSI-RSs, to select one or more CSI-RSs with best signal quality. In a possible implementation, the second terminal device sends the identifier information of the one or more selected CSI-RSs to the first terminal device. In another possible implementation, the second terminal device sends, to the first terminal device, identifier information of beam corresponding to the one or more selected CSI-RSs.

Step S630 is an optional step.

In this application, different numbers of the beams are merely for ease of description in the embodiments, and a beam with a number may also have a feature of a beam with another number. For example, the time interval between the third beam and the fourth beam is greater than or equal to the first time. If the seventh beam is also adjacent to the fourth beam, the seventh beam may also have a feature of the third beam, that is, a time interval between the seventh beam and the fourth beam is greater than or equal to the first time. Similarly, the CSI-RS may also have a feature of a CSI-RS with another number.

Corresponding to the foregoing methods, an embodiment of this application provides a communication device. FIG. 11 to FIG. 13 are diagrams of structures of possible communication apparatuses according to embodiments of this application. These communication apparatuses may be configured to implement a function of the first terminal device, the second terminal device, or the network device in the foregoing method embodiments, and therefore can also implement beneficial effects in the foregoing method embodiments. In this embodiment of this application, the communication device may be the terminal device A or the terminal device B shown in FIG. 1, may be the network device shown in FIG. 1, or may be a module (for example, a chip) used in the first terminal device, the second terminal device, or the network device.

As shown in FIG. 11, the communication apparatus 1100 includes a processing unit 1110 and a transceiver unit 1120. The communication apparatus 1100 is configured to implement the function of the first terminal device, the second terminal device, or the network device in the method embodiment shown in FIG. 6.

When the communication apparatus 1100 is configured to implement the function of the first terminal device in the method embodiment shown in FIG. 6, the transceiver unit 1120 is configured to send first sidelink control information SCI, where the first SCI indicates to send M channel state information reference signals CSI-RSs, and M is a positive integer greater than or equal to 2; and the transceiver unit 1120 is further configured to send the M CSI-RSs, where the M CSI-RSs belong to a same time unit, the M CSI-RSs include a first CSI-RS and a second CSI-RS, the first CSI-RS is sent by using a first beam, the second CSI-RS is sent by using a second beam, and the first beam and the second beam correspond to different spatial domain parameters.

In a possible design, the transceiver unit 1120 is specifically configured to: a beam for sending the first SCI is the same as a beam for sending a third CSI-RS, the third CSI-RS and the first SCI belong to a same time unit, and the third CSI-RS is a 1^{st} CSI-RS in the M CSI-RSs in time domain.

In a possible design, the transceiver unit 1120 is specifically configured to: the M CSI-RSs are sent in a first time unit by using N different beams, where N is a positive integer greater than or equal to 2. A time interval between a third beam and a fourth beam in the N different beams is greater than or equal to first time, and the first time is indicated by a network device, predefined, or preconfigured.

In a possible design, if a quantity of symbols occupied by one of the N beams is Q, and the first time is P, N*Q+(N-1)*P≤L, where L is a quantity of symbols in the first time unit.

In a possible design, the processing unit 1110 is specifically configured to determine a time domain position of a fourth CSI-RS in the M CSI-RSs based on a start position and a first offset. The start position is a 1^{st} symbol occupied by a signal sent by using a fifth beam, and the fifth beam is a beam for sending the fourth CSI-RS; or the start position is a 1^{st} symbol in the first time unit for sending the M CSI-RSs, and all of the M CSI-RSs correspond to different offsets.

In a possible design, the transceiver unit 1120 is specifically configured to: a sixth beam in the N beams is used to send a fifth CSI-RS, and identifier information of the sixth beam is determined based on a time domain position of the fifth CSI-RS or the identifier information of the sixth beam is determined based on a resource identifier of the fifth CSI-RS.

In a possible design, the transceiver unit 1120 is specifically configured to: a 1^{st} symbol position of a seventh beam in the N different beams is indicated by the network device, predefined, or preconfigured; an end position of the seventh beam is determined based on a 1^{st} symbol position of a 1^{st} beam after the seventh beam and the first time; and a 1^{st} symbol occupied by the seventh beam is used for automatic gain control or receive power adjustment.

In a possible design, a 1^{st} symbol occupied by a seventh beam in the N different beams is an automatic gain control AGC symbol; a position of the automatic gain control AGC symbol is indicated by the network device, predefined, or preconfigured; and an end position of the seventh beam is determined based on a position of a 1^{st} AGC symbol after the seventh beam and the first time.

In a possible design, the first SCI further indicates that the M CSI-RSs are used for beam management.

In a possible design, a first indicator field of the first SCI indicates that the M CSI-RSs are used for the beam management; or format information of the first SCI indicates that the M CSI-RSs are used for the beam management.

In a possible design, second SCI indicates configuration information of the M CSI-RSs, and the second SCI is carried in first-stage SCI signaling or second-stage SCI signaling.

In a possible design, the transceiver unit 1120 is specifically configured to obtain the configuration information of the M CSI-RSs, where the configuration information of the M CSI-RSs is indicated by the network device; or the configuration information of the M CSI-RSs is predefined or preconfigured.

In a possible design, the first SCI is carried in first-stage SCI signaling or second-stage SCI signaling.

In a possible design, the transceiver unit 1120 is specifically configured to receive identifier information of one or more beams, where the one or more beams are the beams for sending the M CSI-RSs.

When the communication apparatus 1100 is configured to implement the function of the second terminal device in the method embodiment shown in FIG. 6, the transceiver unit 1120 is configured to receive first sidelink control information SCI, where the first SCI indicates to send M channel state information reference signals CSI-RSs, and M is a positive integer greater than or equal to 2; and the transceiver unit 1120 is further configured to receive the M CSI-RSs, where the M CSI-RSs belong to a same time unit, the M CSI-RSs include a first CSI-RS and a second CSI-RS, the first CSI-RS is sent by using a first beam, the second CSI-RS is sent by using a second beam, and the first beam and the second beam correspond to different spatial domain parameters.

In a possible design, a beam for sending the first SCI is the same as a beam for sending a third CSI-RS, the third CSI-RS and the first SCI belong to a same time unit, and the third CSI-RS is a 1^{st} CSI-RS in the M CSI-RSs in time domain.

In a possible design, the transceiver unit 1120 is specifically configured to receive the M CSI-RSs in a first time unit by using a same beam.

In a possible design, the M CSI-RSs belong to the first time unit, beams for sending the M CSI-RSs are N different beams, and N is a positive integer greater than or equal to 2.

In a possible design, a time interval between a third beam and a fourth beam in the N different beams is greater than or equal to first time, and the first time is indicated by a network device, predefined, or preconfigured.

In a possible design, if a quantity of symbols occupied by one of the N beams is Q, and the first time is P, N*Q+(N-1)*P≤L, where L is a quantity of symbols in the first time unit.

In a possible design, the processing unit 1110 is specifically configured to determine a time domain position of a fourth CSI-RS in the M CSI-RSs based on a start position and a first offset. The start position is a 1^{st} symbol occupied by a signal sent by using a fifth beam, and the fifth beam is a beam for sending the fourth CSI-RS; or the start position is a 1^{st} symbol in the first time unit for sending the M CSI-RSs, and all of the M CSI-RSs correspond to different offsets.

In a possible design, a sixth beam in the N beams is used to send a fifth CSI-RS, and identifier information of the sixth beam is determined based on a time domain position of the fifth CSI-RS or the identifier information of the sixth beam is determined based on a resource identifier of the fifth CSI-RS.

In a possible design, a 1^{st} symbol position of a seventh beam in the N different beams is indicated by the network device, predefined, or preconfigured; an end position of the seventh beam is determined based on a 1^{st} symbol position of a 1^{st} beam after the seventh beam and the first time; and a 1^{st} symbol occupied by the seventh beam is used for automatic gain control or receive power adjustment.

In a possible design, a 1^{st} symbol occupied by a seventh beam in the N different beams is an automatic gain control AGC symbol; a position of the automatic gain control AGC symbol is indicated by the network device, predefined, or preconfigured; and an end position of the seventh beam is determined based on a position of a 1^{st} AGC symbol after the seventh beam and the first time.

In a possible design, the first SCI further indicates that the M CSI-RSs are used for beam management.

In a possible design, a first indicator field of the first SCI indicates that the M CSI-RSs are used for the beam management; or format information of the first SCI indicates that the M CSI-RSs are used for the beam management.

In a possible design, second SCI indicates configuration information of the M CSI-RSs, and the second SCI is carried in first-stage SCI signaling or second-stage SCI signaling.

In a possible design, the transceiver unit 1120 is specifically configured to:
obtain the configuration information of the M CSI-RSs, where
the configuration information of the M CSI-RSs is indicated by the network device; or
the configuration information of the M CSI-RSs is predefined or preconfigured.

In a possible design, the first SCI is carried in first-stage SCI signaling or second-stage SCI signaling.

In a possible design, the transceiver unit 1120 is specifically configured to send identifier information of one or more beams, where the one or more beams are the beams for sending the M CSI-RSs.

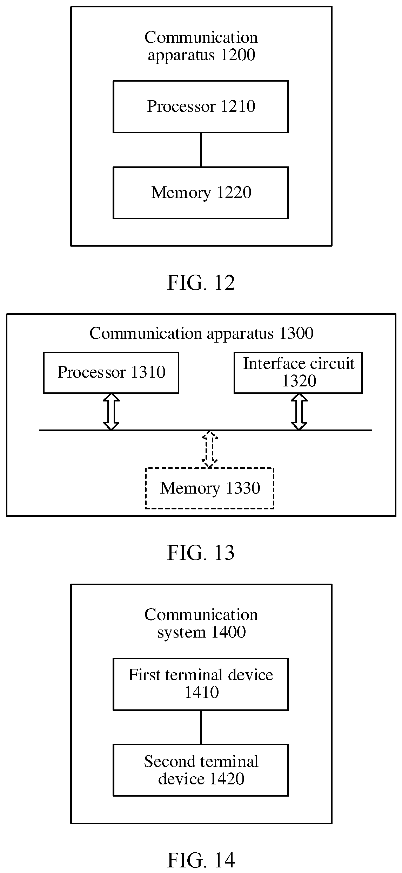

An embodiment of this application provides a communication apparatus 1200. FIG. 12 is a block diagram of another communication apparatus according to an embodiment of this application. The communication apparatus 1200 includes a processor 1210. The processor 1210 is coupled to at least one memory 1220. The processor 1210 is configured to read a computer program stored in the at least one memory 1220, to perform the method in any possible implementation in embodiments of this application.

An embodiment of this application further provides a communication apparatus 1300. As shown in FIG. 13, the communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include: a memory 1330, configured to: store instructions to be executed by the processor 1310, store input data needed by the processor 1310 to run the instructions, or store data generated after the processor 1310 runs the instructions.

When the communication apparatus 1300 is configured to implement the method shown in FIG. 6, the processor 1310 is configured to implement a function of the processing unit 1110, and the interface circuit 1320 is configured to implement a function of the transceiver unit 1120.

When the communication apparatus is a chip used in a first terminal device, the chip in the first terminal device implements a function of the first terminal device in the foregoing method embodiments. The chip in the first terminal device receives information from another module (for example, a radio frequency module or an antenna) in the first terminal device, where the information is sent by a network device or a second terminal device to the first terminal device; or the chip in the first terminal device sends information to another module (for example, a radio frequency module or an antenna) in the first terminal device, where the information is sent by the first terminal device to a network device or a second terminal device.

When the communication apparatus is a chip used in a second terminal device, the chip in the second terminal device implements a function of the second terminal device in the foregoing method embodiments. The chip in the second terminal device receives information from another module (for example, a radio frequency module or an antenna) in the second terminal device, where the information is sent by the second terminal device to the network device or the first terminal device; or the chip in the second terminal device sends information to another module (for example, a radio frequency module or an antenna) in the second terminal device, where the information is sent by the second terminal device to the first terminal device or the network device.

The processor in embodiments of this application may be an integrated circuit chip, and has a signal processing capability. During implementation, steps in the foregoing method embodiments may be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in embodiments of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

An embodiment of this application provides a communication system 1400, including a first terminal device 1410 and a second terminal device 1420 in the communication methods provided in embodiments of this application. FIG. 14 is a block diagram of a communication system 1400 according to an embodiment of this application.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC. In addition, the ASIC may be located in a network device or a terminal device. Certainly, the processor and the storage medium may exist in a network device or a terminal device as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer program or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or nonvolatile storage medium, or may include two types of storage media: the volatile storage medium and the nonvolatile storage medium.

It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

It should be understood that, in this application, "when", "if", and "provided that" all mean that an apparatus performs corresponding processing in an objective situation, and are not intended to limit time, and the terms do not mean that the apparatus is required to perform a determining action during implementation, and do not mean any other limitation.

A person skilled in the art may understand that various digital numbers such as first and second in this application are merely used for differentiation for ease of description, and are not used to limit the scope of embodiments of this application. A specific value of a number (which may also be referred to as an index), a specific value of a quantity, and a position in this application are merely used as examples, but are not unique representation forms, and are not used to limit the scope of embodiments of this application. Various numbers such as first and second in this application are also merely used for differentiation for ease of description, and are not used to limit the scope of embodiments of this application.

It should be understood that the term "and/or" in this application describes only an association relationship for describing associated objects and indicates that three relationships may exist. For example, A and/or B may represent the following three cases: Only A exists, both A and B exist, and only B exists. In addition, the character "/" in this specification usually indicates an "or" relationship between the associated objects. The term "at least one" in this application may represent "one" and "two or more." For example, at least one of A, B, and C may represent the following seventh cases: Only A exists, only B exists, only C exists, both A and B exist, both A and C exist, both C and B exist, and all A, B, and C exist.

It may be clearly understood by a person skilled in the art that, for the purpose of convenient and brief description, for detailed working processes of the foregoing systems, apparatuses, and units, refer to corresponding processes in the foregoing method embodiments. Details are not described herein again.

In several embodiments provided in this application, it should be understood that the disclosed systems, apparatuses, and methods may be implemented in another manner. For example, the described apparatus embodiments are merely examples. For example, unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or the units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

## Claims

1. A communication method, comprising:
sending first sidelink control information SCI, wherein the first SCI indicates to send M channel state information reference signals CSI-RSs, and M is a positive integer greater than or equal to 2; and
sending the M CSI-RSs, wherein
the M CSI-RSs belong to a same time unit, the M CSI-RSs comprise a first CSI-RS and a second CSI-RS, the first CSI-RS is sent by using a first beam, the second CSI-RS is sent by using a second beam, and the first beam and the second beam correspond to different spatial domain parameters.

2. The communication method according to claim 1, wherein
a beam for sending the first SCI is the same as a beam for sending a third CSI-RS, the third CSI-RS and the first SCI belong to a same time unit, and the third CSI-RS is a 1^{st} CSI-RS in the M CSI-RSs in time domain.

3. The communication method according to claim 1 or 2, wherein the sending the M CSI-RSs comprises:
sending the M CSI-RSs in a first time unit by using N different beams, wherein N is a positive integer greater than or equal to 2.

4. The communication method according to claim 3, wherein the sending the M CSI-RSs in a first time unit by using N different beams comprises:
a time interval between a third beam and a fourth beam in the N different beams is greater than or equal to first time, and the first time is indicated by a network device, predefined, or preconfigured.

5. The communication method according to claim 4, wherein the sending the M CSI-RSs in a first time unit by using N different beams comprises:
if a quantity of symbols occupied by one of the N beams is Q, and a quantity of symbols in the first time is P, N*Q+(N-1)*P≤L, wherein L is a quantity of symbols in the first time unit, and Q, P, and L are all positive integers.

6. The communication method according to any one of claims 1 to 5, wherein
a time domain position of a fourth CSI-RS in the M CSI-RSs is determined based on a start position and a first offset, wherein
the start position is a 1^{st} symbol occupied by a signal sent by using a fifth beam, and the fifth beam is a beam for sending the fourth CSI-RS; or
the start position is a 1^{st} symbol in the first time unit for sending the M CSI-RSs, and all of the M CSI-RSs correspond to different offsets.

7. The communication method according to any one of claims 3 to 6, wherein the sending the M CSI-RSs in a first time unit by using N different beams comprises:
a sixth beam in the N beams is used to send a fifth CSI-RS, and identifier information of the sixth beam is determined based on a time domain position of the fifth CSI-RS or the identifier information of the sixth beam is determined based on a resource identifier of the fifth CSI-RS.

8. The communication method according to any one of claims 3 to 7, wherein the sending the M CSI-RSs in a first time unit by using N different beams comprises:
a 1^{st} symbol position of a seventh beam in the N different beams is indicated by the network device, predefined, or preconfigured;
an end position of the seventh beam is determined based on a 1^{st} symbol position of a 1^{st} beam after the seventh beam and the first time; and
a 1^{st} symbol occupied by the seventh beam is used for automatic gain control or receive power adjustment.

9. The communication method according to any one of claims 3 to 7, wherein the sending the M CSI-RSs in a first time unit by using N different beams comprises:
a 1^{st} symbol occupied by a seventh beam in the N different beams is an automatic gain control AGC symbol;
a position of the automatic gain control AGC symbol is indicated by the network device, predefined, or preconfigured; and
an end position of the seventh beam is determined based on a position of a 1^{st} AGC symbol after the seventh beam and the first time.

10. The communication method according to any one of claims 1 to 9, wherein
the first SCI further indicates that the M CSI-RSs are used for beam management.

11. The communication method according to claim 10, wherein
a first indicator field of the first SCI indicates that the M CSI-RSs are used for the beam management; or
format information of the first SCI indicates that the M CSI-RSs are used for the beam management.

12. The communication method according to any one of claims 1 to 11, wherein
second SCI indicates configuration information of the M CSI-RSs, and the second SCI is carried in first-stage SCI signaling or second-stage SCI signaling.

13. The communication method according to any one of claims 1 to 12, wherein
the configuration information of the M CSI-RSs is obtained, wherein
the configuration information of the M CSI-RSs is indicated by the network device; or
the configuration information of the M CSI-RSs is predefined or preconfigured.

14. The communication method according to any one of claims 1 to 13, wherein
the first SCI is carried in first-stage SCI signaling or second-stage SCI signaling.

15. A communication method, comprising:
receiving first sidelink control information SCI, wherein the first SCI indicates to send M channel state information reference signals CSI-RSs, and M is a positive integer greater than or equal to 2; and
receiving the M CSI-RSs, wherein
the M CSI-RSs belong to a same time unit, the M CSI-RSs comprise a first CSI-RS and a second CSI-RS, the first CSI-RS is sent by using a first beam, the second CSI-RS is sent by using a second beam, and the first beam and the second beam correspond to different spatial domain parameters.

16. The communication method according to claim 15, wherein
a beam for sending the first SCI is the same as a beam for sending a third CSI-RS, the third CSI-RS and the first SCI belong to a same time unit, and the third CSI-RS is a 1^{st} CSI-RS in the M CSI-RSs in time domain.

17. The communication method according to claim 15 or 16, wherein the receiving the M CSI-RSs comprises:
receiving the M CSI-RSs in a first time unit by using a same beam.

18. The communication method according to any one of claims 15 to 17, wherein
the M CSI-RSs belong to the first time unit, beams for sending the M CSI-RSs are N different beams, and N is a positive integer greater than or equal to 2.

19. The communication method according to claim 18, wherein that beams for sending the M CSI-RSs are N different beams comprises:
a time interval between a third beam and a fourth beam in the N different beams is greater than or equal to first time, and the first time is indicated by a network device, predefined, or preconfigured.

20. The communication method according to claim 19, wherein that beams for sending the M CSI-RSs are N different beams comprises:
if a quantity of symbols occupied by one of the N beams is Q, and a quantity of symbols in the first time is P, N*Q+(N-1)*P≤L, wherein L is a quantity of symbols in the first time unit, and Q, P, and L are all positive integers.

21. The communication method according to any one of claims 15 to 20, wherein
a time domain position of a fourth CSI-RS in the M CSI-RSs is determined based on a start position and a first offset, wherein
the start position is a 1^{st} symbol occupied by a signal sent by using a fifth beam, and the fifth beam is a beam for sending the fourth CSI-RS; or
the start position is a 1^{st} symbol in the first time unit for sending the M CSI-RSs, and all of the M CSI-RSs correspond to different offsets.

22. The communication method according to any one of claims 18 to 21, wherein that beams for sending the M CSI-RSs are N different beams comprises:
a sixth beam in the N beams is used to send a fifth CSI-RS, and identifier information of the sixth beam is determined based on a time domain position of the fifth CSI-RS or the identifier information of the sixth beam is determined based on a resource identifier of the fifth CSI-RS.

23. The communication method according to any one of claims 18 to 22, wherein that beams for sending the M CSI-RSs are N different beams comprises:
a 1^{st} symbol position of a seventh beam in the N different beams is indicated by the network device, predefined, or preconfigured;
an end position of the seventh beam is determined based on a 1^{st} symbol position of a 1^{st} beam after the seventh beam and the first time; and
a 1^{st} symbol occupied by the seventh beam is used for automatic gain control or receive power adjustment.

24. The communication method according to any one of claims 18 to 22, wherein that beams for sending the M CSI-RSs are N different beams comprises:
a 1^{st} symbol occupied by a seventh beam in the N different beams is an automatic gain control AGC symbol;
a position of the automatic gain control AGC symbol is indicated by the network device, predefined, or preconfigured; and
an end position of the seventh beam is determined based on a position of a 1^{st} AGC symbol after the seventh beam and the first time.

25. The communication method according to any one of claims 15 to 24, wherein
the first SCI further indicates that the M CSI-RSs are used for beam management.

26. The communication method according to claim 25, wherein
a first indicator field of the first SCI indicates that the M CSI-RSs are used for the beam management; or
format information of the first SCI indicates that the M CSI-RSs are used for the beam management.

27. The communication method according to any one of claims 15 to 26, wherein
second SCI indicates configuration information of the M CSI-RSs, and the second SCI is carried in first-stage SCI signaling or second-stage SCI signaling.

28. The communication method according to any one of claims 15 to 27, wherein
the configuration information of the M CSI-RSs is obtained, wherein
the configuration information of the M CSI-RSs is indicated by the network device; or
the configuration information of the M CSI-RSs is predefined or preconfigured.

29. The communication method according to any one of claims 15 to 28, wherein
the first SCI is carried in first-stage SCI signaling or second-stage SCI signaling.

30. A first terminal device, comprising a processor, wherein the processor is coupled to at least one memory, and the processor is configured to read a computer program stored in the at least one memory, to perform the method according to any one of claims 1 to 14.

31. A second terminal device, comprising a processor, wherein the processor is coupled to at least one memory, and the processor is configured to read a computer program stored in the at least one memory, to perform the method according to any one of claims 15 to 29.

32. A computer-readable storage medium, comprising instructions, wherein when the instructions are run on a computer, the computer is enabled to perform the method according to any one of claims 1 to **14** or the method according to any one of claims 15 to 29.

33. A computer program product, comprising instructions, wherein when the instructions are run on a computer, the computer is enabled to perform the method according to any one of claims 1 to **14** or the method according to any one of claims 15 to 29.

34. A chip, comprising a processor and a communication interface, wherein the processor is configured to read instructions or a computer program, to perform the method according to any one of claims 1 to **14** or the method according to any one of claims 15 to 29.

35. A communication apparatus, comprising at least one processor and an interface circuit, wherein the interface circuit is configured to input or output instructions and/or data for the at least one processor, and when the at least one processor executes the instructions, the apparatus implements the method according to any one of claims 1 to 29.

36. A communication system, comprising the first terminal device according to claim 30 and the second terminal device according to claim 31.
